# EUROPÄISCHE PATENTSCHRIFT

(11) **EP 1 224 832 B1**
(45) Veröffentlichungstag und Bekanntmachung des Hinweises auf die Patenterteilung: **04.02.2004**
(21) Anmeldenummer: 00987043.7
(22) Anmeldetag: 27.10.2000
(51) Int. Cl.: H04Q 7/38

(54) **VERFAHREN ZUR DYNAMISCHEN ZUWEISUNG VON RESSOURCEN IN EINEM DIGITALEN FUNK-KOMMUNIKATIONSSYSTEM**
METHOD FOR THE DYNAMIC ALLOCATION OF RESOURCES IN A DIGITAL RADIO COMMUNICATION SYSTEM
PROCEDE D'ATTRIBUTION DYNAMIQUE DE RESSOURCES DANS UN SYSTEME DE COMMUNICATIONS RADIO NUMERIQUE

(30) Priorität: 27.10.1999 DE 19951797
(43) Veröffentlichungstag der Anmeldung: 24.07.2002
(73) Patentinhaber: SIEMENS AKTIENGESELLSCHAFT, 80333 München (DE)
(72) Erfinder: SOMMER, Volker, 13503 Berlin (DE); KRAUSE, Jörn, 12107 Berlin (DE); WEGNER, Frank, 13407 Berlin (DE); WEGMANN, Bernhard, 83607 Holzkirchen (DE); VON BRANDT, Achim, 81929 München (DE); ÖTTL, Martin, 82362 Weilheim (DE); GRUHN, Thomas, 12109 Berlin (DE)
(86) Internationale Anmeldenummer: PCT/DE2000/003819
(87) Internationale Veröffentlichungsnummer: WO 2001/031938

(56) Entgegenhaltungen:
- EP-A- 1 069 790
- US-A- 5 914 950
- MADEMANN F: "GENERAL PACKET RADIO SERVICE - A PACKET MODE SERVICE WITHIN THE GSM" PROCEEDINGS OF THE INTERNATIONAL SWITCHING SYMPOSIUM,DE,BERLIN, VDE VERLAG, Bd. SYMP. 15, 23. April 1995 (1995-04-23), Seiten 36-40, XP000495534 ISBN: 3-8007-2093-0

## Beschreibung

Die Erfindung betrifft ein Verfahren zur dynamischen Zuweisung von Ressourcen in einem digitalen Funk-Kommunikationssystem, insbesondere einem Mobilfunksystem, und ein derartig ausgebildetes Funk-Kommunikationssystem.

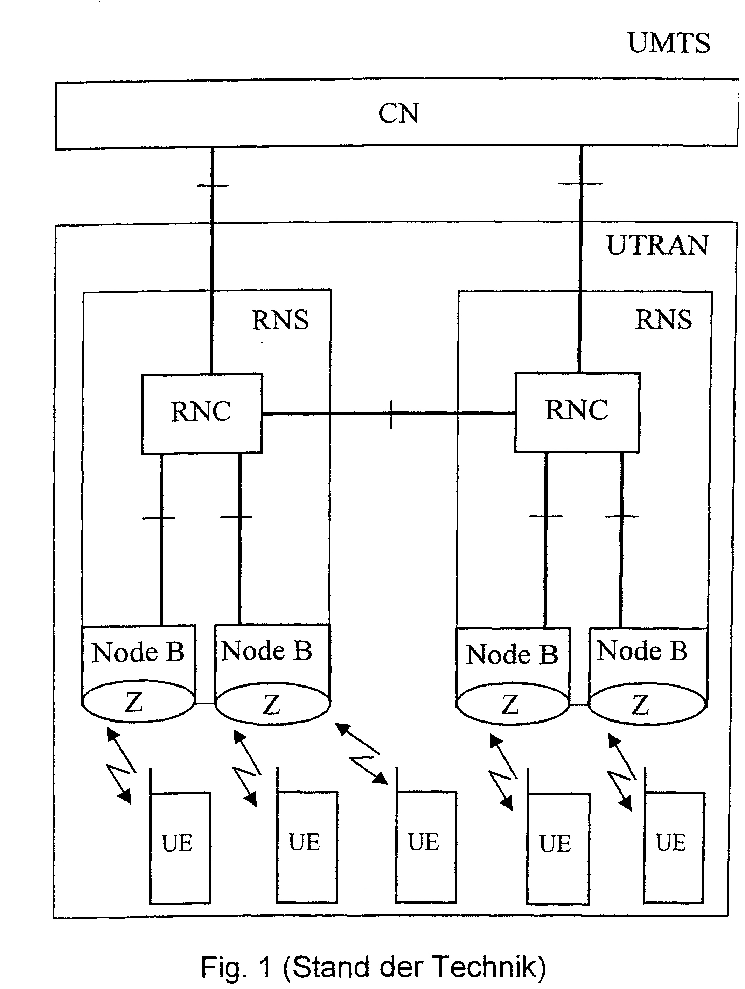

In Fig. 1 ist beispielhaft die logische Architektur des zukünftigen universellen Telekommunikationssystems UMTS (Universal Mobile Telecommunications System) dargestellt, ohne daß die Erfindung hierauf beschränkt wäre.

Über eine sogenannte Funkschnittstelle wird eine Verbindung zwischen mindestens einer Basisfunkstation Node B und mehreren Teilnehmerstationen UE (User Equipment), die insbesondere mobile, aber auch ortsfeste Sende- und Empfangsgeräte sein können und die untersten Glieder des Funk-Kommunikationssystems sind, hergestellt. Eine Basisfunkstation Node B versorgt eine bis zu mehreren Quadratkilometern große Funkzone, eine sogenannte Funkzelle Z. Infolge der räumliche Begrenzung einer Funkzone lassen sich die knappen Trägerfrequenzen, auf denen die Daten moduliert übertragen werden, in einer gewissen Entfernung zur gleichen Zeit wiederverwenden, ohne daß es zu gegenseitigen Störungen (Interzell-Interferenzen) kommt. Mehrere Funkzellen Z bilden hierfür ein gemeinsam von einer Basisfunkstationssteuerung RNC (Radio Network Controller) verwalteten Funkbereich RNS (Radio Network Subsystem). Mehrere Funkbereiche RNS bilden ein Funknetz (UTRAN = Universal Telecommunications Radio Access Network), über das die Verbindung mit dem Kernnetz CN (Core Network) des Mobilkommunikationssystems UMTS hergestellt wird und welches u.a. den Zugang zum analogen und digitalen Festnetz PSTN, ISDN, in ein spezielles Paketvermittlungsnetz, insbesondere ein ATM-(Asynchron Transfer Mode) und IP- (Internet Protocol) Netz, oder in ein weiteres Mobilfunknetz erlaubt.

Um den Bedarf des insgesamt zur Verfügung stehenden Spektrums an Trägerfrequenzen besser nutzen zu können, sind synchrone Multiplexverfahren auf der Basis eines frequenz-, zeit- und/oder spreizcodeselektiven Vielfachzugriffs zur Verteilung der Übertragungskapazität eines Kanals auf mehrere Verbindungen eingeführt worden, die entsprechend mit FDMA (Frequency Division Multiple Access), TDMA (Time Division Multiple Access) und CDMA (Code Division Multiple Access) bezeichnet werden. Hierzu wird in Absprache zwischen Sender und Empfänger unter Einbeziehung der Basisfunkstationen eine fest vorgegebene Zuordnung aus sende- und empfangssynchronen Frequenzbändern, Zeitschlitzen und/oder Codes genutzt.

Wenn im weiteren der Begriff "Kanal" oder "physikalischer Kanal" gebraucht wird, so wird er identisch zu dem Begriff "Ressource" verwendet, die gegebenenfalls auch über mehrere physikalische Kanäle jeweils eine bestimmte Übertragungsrate über die Funkschnittstelle zur Verfügung stellt.

Nachteilig an diesen Multiplexverfahren ist, daß die Übertragungskapazität einer solchen leitungsvermittelten Verbindung durch die Multiplex-Synchronisierung fest vorgegeben ist und auch dann, wenn momentan keine Übertragungskapazität benötigt wird, diese nicht für andere Teilnehmerstationen freigegeben werden kann.

Letzteres leistet ein weiteres grundsätzliches Verfahren, die Paketvermittlung. Sie beruht auf der gemeinsamen Nutzung der Übertragungskapazität eines physikalischen Kanals durch mehrere verschiedene Verbindungen (Bearer). Auch hierfür wird der Kanal auf der Zeitachse unterteilt, allerdings nicht vordergründig in feste Zeitschlitze, sondern in adressierte Datenpakete variabler Länge. Die Daten werden zeitvariant übertragen, weshalb man auch von einem asynchronen Multiplex-Verfahren spricht. Jeder Sender kann jederzeit auf die bis dahin ungenutzte Übertragungskapazität zugreifen und seine Daten z.B. nach dem stochastischen Zugriffsverfahren ALOHA übertragen. Außerdem läßt sich die Datenrate einer Verbindung sehr leicht stufenlos variieren. Der Sender kann die Datenrate sowohl dadurch beeinflussen, in welchen zeitlichen Abständen er die Datenpakete sendet, als auch durch deren Länge.

Zukünftige Mobilfunksysteme wie das UMTS werden den Teilnehmern eine Vielzahl unterschiedlicher Dienste mit unterschiedlichen Datenraten anbieten. Neben der reinen Sprachübertragung werden Multimedia-Anwendungen mit der einhergehenden Dienstevielfalt einen großen Teil am Datenaufkommen ausmachen. Die auch netzseitige Einbindung der Paketvermittlung ist hier besonders vielversprechend.

Zur bidirektionalen Nachrichtenübertragung von (Uplink) und zu (Downlink) einer Teilnehmerstation sind im UMTS sowohl der TDD-Modus (TDD = Zeitduplex), eine Kombination eines Breitband-TDMA/FDMA-Systems mit einem CDMA-System, als auch der FDD-Modus (FDD = Frequenzduplex), ein Breitband-CDMA, vorgesehen. Insbesondere Breitband-CDMA (W-CDMA) verspricht eine hohe Flexibilität und Effizienz in Hinsicht auf unterschiedliche Datenraten und Anforderungen an die Dienstgüte (Quality of Service = QoS). Dies wird durch das Code Division Multiple Access Verfahren (CDMA) erreicht, bei dem jeder Bearer eine unterschiedliche Kombination kurzer und langer Kodesequenzen für die Übermittlung von Nachrichten zwischen den Teilnehmerstationen verwendet. Der Empfänger stellt einen einzelnen Bearer wieder her, indem er den empfangenen Datenstrom mit den passenden kurzen und langen Codesequenzen korreliert.

Dieses Zugriffsverfahren stellt eine sehr flexible Zuteilung der Ressourcen zur Verfügung, da es Bearer mit unterschiedlichen Spitzenwerten für die Datenrate und Bearer mit variablen Datenraten unterstützt. Andererseits erfordert diese Flexibilität eine strenge Kontrolle des Zugriffes auf einen Kanal, um eine Überlastung zu vermeiden und eine vordefinierte Übertragungsqualität zu sichern. Diese Ziele werden mit einer 2-Schritt-Strategie für die Zuteilung der Bandbreite erreicht:

Beim Verbindungsaufbau werden gewisse Übertragungs-Ressourcen für jeden Bearer in Abhängigkeit von seiner Bandbreite und den QoS-Anforderungen bereitgestellt. Dies wird mit einer Admission Control Function (Verbindungsannahmefunktion) erreicht, welche eine angemessene Zahl an Code- und Interferenz-Ressourcen beim Verbindungsaufbau reserviert und ein sogenanntes Transport Format-Set TFCS (Transport Format Combination Set) zuteilt, worunter im wesentlichen eine Aufstellung aller möglichen Datenraten, die vom Bearer genutzt werden können, und deren Codierung für die Funkübertragung zu verstehen ist. Diese Funktion stellt eine langzeitige Zuteilung der angeforderten Übertragungs-Ressourcen zur Verfügung und kann einen sogenannten statistischen Multiplex-Vorteil, der durch den gegenseitigen Ausgleich des Bitratenbedarfs von Bearern mit variabler Datenrate entsteht, berücksichtigen.

Eine kurzfristige Ressourcen-Zuteilung hingegen wird vom sogenannten MAC (Media Access Control) gesteuert. Der MAC ist nach dem ISO-OSI-Schichtenmodell, das für eine weitgehende Standardisierung der Kommunikationssysteme geschaffen wurde, der Schicht 2 (Layer 2) zugeordnet und ist für die Nutzung der verschiedenen Verkehrskanäle TCH (Transport Channels) verantwortlich. Der MAC wählt ein bestimmtes Transportformat (TF) , im wesentlichen eine bestimmte Datenrate für die Übertragung, aus der Liste der Transportförmate aus, die beim Verbindungsaufbau definiert wurden, wobei für eine gerechte oder priorisierte Zuteilung der verfügbaren Bandbreite in Abhängigkeit von den aktuellen Anforderungen der verschiedenen Bearer Packet Scheduling-Algorithmen sorgen.

Allerdings existieren Grenzzustände, welche auf die Kapazität einer Funkzelle einwirken. Die maximale Übertragungskapazität in einer Funkzelle ist erreicht, wenn entweder keine freien Ressourcen mehr verfügbar sind (sog. Hard Blocking) oder aber falls bei nicht vollständig orthogonalen Systemen, die in der Praxis nur schwer erreicht werden, die Gesamtinterferenz der Signale, hervorgerufen insbesondere durch eine gegenseitige Beeinflussung der Nachbarzellen, eine bestimmte Schwelle überschreitet (sog. Soft Blocking).

Um vor allem bei TDMA-basierten Systemen, bei denen im allgemeinen Hard Blocking die Übertragungskapazität beschränkt, die zur Verfügung stehenden Ressourcen möglichst optimal zu nutzen, sollten die Ressourcen zwischen den Teilnehmerstationen dynamisch umgeschaltet werden können, je nach den temporären Kapazitätsanforderungen sämtlicher Dienste der einzelnen Teilnehmerstationen. Hierzu müssen in jeder Funkzelle die verfügbaren Ressourcen und deren Zuordnung zu bestimmten Bearern verwaltet werden.

Da aufgrund der Einführung schneller paketorientierter Core-Netzwerke (ATM- oder IP-basiert) zu erwarten ist, daß in Zukunft die strenge Unterscheidung in Echtzeitdienste und keine Echtzeitdienste (Real-Time- und Non-Real-Time-Service) aufgehoben werden wird und sich die Dienste lediglich in ihren QoS-Parametern (im wesentlichen Bitfehlerrate, Verzögerungszeiten, Jitter) unterscheiden werden, stellt sich die Forderung, daß ein zellulares Funk-Kommunikationssystem der dritten Generation einen einheitlichen Übertragungsmechanismus für sämtliche Dienste anbieten muß, der flexibel parametrisierbar ist.

Hierzu sollte die Umschaltung der Ressourcen aufgrund dynamisch wechselnder Datenraten sehr schnell nach jedem TDMA-Rahmen oder nach jedem übertragenen Datenblock, in die die zu übertragenden Daten senderseitig aufgeteilt werden, erfolgen können, um ungenutzte Ressourcen zu vermeiden und dadurch die spektrale Effizienz zu maximieren. In der Systemarchitektur UTRAN (UMTS Terrestrial Radio Access Network) beispielsweise muß ein Umschalten alle ca. 10 ms möglich sein, was der Länge eines TDMA-Rahmens und damit 16 Zeitschlitzen (UTRA TDD multiple access) entspricht.

Bisher wird das Problem umgangen, indem die mögliche Dynamik bei der Ressourcen-Zuteilung bewußt eingeschränkt wird. Dazu werden jedem Bearer von der Basisfunkstationssteuerung RNC soviele Kanäle (DCH = Dedicated Channels) dediziert, das heißt exklusiv zugeordnet, wie für die Übertragung des Spitzenwertes der Datenrate von Echtzeit-Diensten erforderlich ist.

Aufgrund der hohen Dynamikanforderungen sollte die Belegung der Ressourcen vom MAC (Layer 2) gesteuert werden. Layer 2 betrifft die Sicherungsschicht im OSI-Referenzmodell und ist darauf spezialisiert, den Anfang und das Ende von Datenblöcken abzugrenzen und und sie mit der gewünschten Zuverlässigkeit von einem Ende zum anderen Ende einer Verbindung zu befördern. Der Funkressourcen-Manager RRC (Radio Resource Control) auf der Vermittlungsschicht Layer 3 nach dem OSI-Referenzmodell für die Kommunikation zwischen den Basisfunkstationssteuerungen RNC eines Kern-Netzwerkes, ist hingegen keinesfalls in der Lage, Änderungen der Zuweisungen auf Datenblockbasis oder TDMA-Rahmenbasis durchzuführen.

Im Gegensatz zum FDD-Modus (W-CDMA), bei dem jeder Verbindung ein kontinuierlich belegter physikalischer Kanal mit sehr niedriger Kapazität zugeordnet werden kann, der unter anderem die Ressourcen-Zuteilungs-Information trägt, ist diese Lösung für den TDD-Modus (TD-CDMA) nicht zugänglich, da zu wenig Ressourcen zur Verfügung stehen, und diese darüber hinaus eine jeweilige große Übertragungskapazität aufweisen. Deshalb ist bei TDD und Burst-förmigem Datenverkehr eine ständige Belegung einer Ressource für Verbindungen mit diskontinuierlichem Datenaufkommen zwecks Vermeidung von Hardblocking nachteilig mit einer Beschränkung der Effizienz verbunden.

In Funk-Kommunikationssystemen sind die durch ein beliebiges Vielfachzugriffsverfahren definierten physikalischen Kanäle zwecks Erbringung einer Vielzahl von Funktionen an der Funkschnittstelle (z.B. Signalisierung, Broadcast von allgemeinen Systeminformationen, Synchronisierung, Ressourcenzuteilung, Paging, Datenübertragung) in eine Reihe von logischen Kanäle eingeteilt. Nutzdaten (z.B. Sprache, FAX, Video) werden im allgemeinen über Verkehrskanäle (Traffic Channels TCH) und Steuersignale im allgemeinen über Signalisierungskanäle (Control Channels CCH) übertragen.

Nach der bekannten TDD-Systemarchitektur wird im Downlink zur Signalisierung einer Ressourcen-Zuteilung der Signalisierungskanal FACH (Forward Link Access Channel), ein CCH (Common Channel) verwendet, während im Uplink die Signalisierung einer Ressourcen-Anforderung im Signalisierungskanal RACH (Random Access Channel) erfolgt, ebenfalls ein CCH.

Sowohl FACH als auch RACH benötigen eine hohe Übertragungskapazität, da die Ressourcen-Zuteilung für sämtliche Teilnehmer einer Funkzelle, denen nicht ständig ein dedizierter physikalischer Kanal zugeordnet ist, abgewickelt werden muß. Selbst wenn angenommen wird, daß deren Kapazität abhängig von der Gesamtlast in der Zelle skaliert und die Signalisierung hierüber im Downlink über den unidirektionalen logischen Steuerkanal BCH (Broadcast Channel) erfolgt, müssen ständig Ressourcen für diesen Zweck reserviert werden, da diese Anpassung nur semi-statisch erfolgen kann.

Ein weiterer Nachteil ist darin zu sehen, daß auf dem FACH keine Sendeleistungssteuerung (Power Control) möglich ist und demzufolge bei Standorten der Teilnehmerstationen nahe der Funkzellgrenzen eine hohe Interzell-Interferenzleistung erzeugt wird.

Ferner kann aufgrund der hohen Signalisierungslast der RACH nicht zusätzlich für Paketübertragungen genutzt werden. Dies bedeutet, daß auch bei sehr kleinen Datenpaketen, die im Uplink übermittelt werden sollen, ein hoher Signalisierungs-Overhead nicht zu vermeiden ist. Auch ist die feste Zuteilung von RACH und FACH in jeweils bestimmten Zeitschlitzen besonders anfällig für Interferenz von Nachbarzellen, insbesondere im Falle unkoordinierter Netze.

Weiterhin gestattet das gegenwärtige Signalisierungskonzept mittels RACH und FACH keine flexible Übertragung beliebiger Kombinationen von Diensten unter Verwendung des TFCI (Transport Format Combination Indicator), sondern lediglich die Zuweisung bestimmter Ressourcen für eine vorgegebene Zeitdauer, wobei ein festes Datenformat angenommen wird.

Nicht zuletzt muß aufgrund der Außenband-Signalisierung über einen CCH jede Teilnehmerstation, der kein kontinuierlich belegter dedizierter Kanal zugeordnet ist, gleichzeitig sowohl den Signalisierungskanal FACH als auch den temporär zugeordneten Verkehrskanal TCH empfangen, was sich in einer erhöhten Komplexität und einem hohen Energieverbrauch der Teilnehmerstation auswirkt.

Der Erfindung liegt daher die Aufgabe zugrunde, das Funkressourcen-Management in einem Funk-Kommunikationssystem dahingehend zu verbessern, daß vorstehend aufgeführte Nachteile vermieden werden. Insbesondere soll durch eine flexiblere dynamische Ressourcen-Belegung die insgesamt dem System zur Verfügung stehenden Frequenzen je Zeiteinheit effektiver verwaltet werden. Diese Aufgabe wird durch ein Verfahren mit den Merkmalen des Anspruchs 1 und ein Funk-Kommunikationssystem mit den Merkmalen des Anspruchs 21 gelöst. Vorteilhafte Weiterbildungen sind den Unteransprüchen zu entnehmen.

Das erfindungsgemäße Verfahren wird auf der Basis des beschriebenen UMTS-Mobilfunksystems beispielsweise folgendermaßen realisiert. Dabei wird eine Mehrzuteilung von physikalischen Kanälen zugelassen, im TDD-Modus (TD-CDMA) von UMTS oder eines vergleichbaren Funk-Kommunikationssystems also Zeitschlitze und/oder Codes. Hierdurch wird einerseits die quasi-statische Vergabe von Ressourcen durch den Funkressourcen-Manager RRC einheitlich für alle Kanäle des Netzwerkes durchgeführt, andererseits aber den dedicated Medium Access Control (MAC-d)-Instanzen durch Wechselwirken untereinander die Möglichkeit eingeräumt, sehr schnell Übertragungskapazität zwischen mehreren Teilnehmerstationen auszutauschen. Die MAC-d-Instanzen sind für die teilnehmerspezifische Verwaltung der Ressourcen der Dienste auf die DCH einer Teilnehmerstation verantwortlich, wobei nach den bisherigen Entwürfen eine direkte Interaktion zwischen verschiedenen MAC-d-Instanzen nicht vorgesehen ist.

In weiterer Ausgestaltung der Erfindung wird vorgeschlagen, die bisherige Außenband-Signalisierung mittels RACH und FACH durch eine Inband-Signalisierung innerhalb bestimmter dedizierter physikalischer Kanäle DPCH (Dedicated Physical Channels) zu ersetzen. Dies erhöht die Flexibilität und verringert sowohl die erzeugte Interferenz als auch die Anfälligkeit gegenüber der Interferenz von Nachbarzellen (Inter Cell Interference). Weiterhin verringern sich die Anforderungen an die Teilnehmerstationen, indem diese für eine Paketübertragung nur noch einen Downlink-Zeitschlitz (TDD) beobachten müssen.

Darüber hinaus wird erfindungsgemäß das bisherige TFCI-Konzept dahingehend erweitert, daß durch eine eindeutige Zuordnung bestimmter TFCI-Werte zu bestimmten Teilnehmerstationen eine zusätzliche Teilnehmerstations-Kennung eingefügt wird. Hierdurch kann der Signalisierungsaufwand erheblich reduziert, aber auch gleichzeitig sehr flexibel gehalten werden.

Gemäß der Erfindung wird jeder Teilnehmerstation im Uplink und im Downlink in Abhängigkeit von der jeweiligen maximalen Gesamtdatenrate, den Delay-Anforderungen, den mittleren Datenraten sowie der Interferenzsituation, eine bestimmte Anzahl von DPCH zugeordnet. Entscheidend hierbei ist, daß die Reservierung von Ressourcen nicht exklusiv erfolgen muß, sondern jede Ressource vom Funkressourcen-Manager RRC gleichzeitig mehreren Teilnehmerstationen zugeordnet werden kann. Durch dieses "Überladen" von physikalischen Kanälen besteht bei variablen Datenraten die Möglichkeit, eine Ressource sehr schnell im MAC-Layer (MAC-d) auf Datenblockbasis oder TDMA-Rahmenbasis zwischen mehreren Teilnehmerstationen umzuschalten, ohne die relativ zeitaufwendige Änderung der Zuweisung der Ressourcen im Funkressourcen-Manager RRC durchführen zu müssen. Die Summe der verfügbaren Übertragungskapazität für eine Teilnehmerstation über alle zugewiesenen Ressourcen übersteigt dabei im allgemeinen die benötigte Übertragungsrate deutlich, um dem MAC-Layer einen genügend großen Entscheidungsraum bei der Belegung von Ressourcen zur Verfügung zu stellen.

Grundsätzlich kann eine Datenübertragung sowohl im Downlink als auch im Uplink für eine Teilnehmerstation nur in denjenigen Ressourcen erfolgen, die der Teilnehmerstation vom Funkressourcen-Manager RRC zugewiesen wurden.

Bei der Zuteilung der Ressourcen im Funkressourcen-Manager RRC werden in weiterer Ausprägung Messungen der jeweiligen Teilnehmerstation (im Downlink) und der Basisfunkstation (im Uplink) ausgewertet. Aufgrund der Meßergebnisse erhält jede verfügbare Ressource einen bestimmten Index, der festlegt, in welcher Reihenfolge und für welchen Dienst für den Fall mehrerer CCTrCH (Coded Composite Transport Channel) die Ressourcen belegt werden sollen. Die Messungen werden während der Verbindung regelmäßig wiederholt, damit bei Bedarf im Funkressourcen-Manager RRC rechtzeitig die Neuvergabe der Indizees und gegebenenfalls eine Umzuweisung bestimmter Ressourcen erfolgen kann.

In weiterer Ausgestaltung wird jeder Teilnehmerstation genau eine der ihr zugeordneten Ressourcen als Signalisierungs-Ressource definiert. Diese Signalisierungs-Ressource erhält in jedem TDMA-Rahmen zusätzlich zu den Daten den TFCI in einem beim Verbindungsaufbau festgelegten Format, der die Umkehrung des Rate Matching sowie die Separierung der Datenpakete gestattet. Der TFCI bezieht sich hierbei immer auf das gesamte Multiplexsignal, das sämtliche Teilnehmerdaten enthält und im allgemeinen in mehreren Ressourcen übertragen wird.

Eine weitere Ausgestaltung sieht vor, daß für den Fall, daß eine Signalisierungs-Ressource von mehreren Teilnehmerstationen belegt wird, diese Ressource den TFCI für alle Teilnehmerstationen trägt, wobei für den TFCI ein Codierschema verwendet wird, mit dem sämtliche möglichen Transportformate der Teilnehmerstationen voneinander unterschieden werden. Sämtliche Teilnehmerstationen dieser Ressource lesen in diesem Fall in jedem in einem TDMA-Rahmen übertragenen Datenblock den TFCI-Wert und erkennen anhand des Wertes, ob im aktuellen Datenblock Daten für sie übertragen werden.

Für den Fall, daß eine Teilnehmerstation mindestens eine ihr exklusiv zugeordnete Ressource besitzt, das heißt eine Ressource, die nicht "überladen" ist, trägt in weiterer Ausprägung eine dieser Ressourcen den TFCI dieser Teilnehmerstation analog zur bisherigen TFCI-Signalisierung innerhalb eines DPCH.

Für den Fall, daß die verfügbaren Ressourcen einer Teilnehmerstation über mehrere Zeitschlitze verteilt sind, ist es besonders im Downlink vorteilhaft, den TFCI in den zeitlich ersten Zeitschlitz eines Datenblocks zu legen, um vor allem in der Teilnehmerstation unnötiges Zwischenspeichern von Daten zu vermeiden.

In Fällen, in denen eine TFCI-tragende Ressource für mehrere Teilnehmerstationen gültig ist, wird in einer weiteren Ausgestaltung die Sendeleistung des TFCI entsprechend eingestellt, wobei eine Unterscheidung zwischen Downlink und Uplink notwendig ist.

Hierzu wird in Fortführung des Erfindungsgedankens im Downlink für den TFCI (und die Midamble der Datenpakete) die Leistung so gewählt, daß die am weitesten entfernte Teilnehmerstation dieser Ressource erreicht werden kann. Dabei lassen sich zur Vermeidung unnötiger Interferenz beim Pooling der Teilnehmerstationen auf gemeinsame Signalisierungs-Ressourcen solche Teilnehmerstationen in weiterer Ausgestaltung zusammenlegen, die etwa dieselbe Sendeleistung benötigen. Im Gegensatz zum TFCI ist der Datenteil der Signalisierungs-Ressource immer nur an eine Teilnehmerstation gerichtet und wird deshalb nur mit einer Leistung gesendet, die ausreicht, um die entsprechende Teilnehmerstation zu erreichen.

Im Uplink ist keine Sonderregelung bezüglich der Sendeleistung notwendig, da kein Broadcasting (Punkt-zu-Mehrpunkt-Senden) der TFCI-Information erforderlich ist und deshalb auch in Ressourcen, die temporär für bestimmte TDMA-Rahmenperioden verschiedenen Teilnehmerstationen zugeordnet werden, sogenannte shared Ressourcen, jede Teilnehmerstation eine individuelle Sendeleistung unter Berücksichtigung der Kanaldämpfung wählt.

Die Bestätigung von Datenübertragungen erfolgt in weiterer Ausgestaltung durch Mitteilungen zwischen den höheren Layern, die entsprechend dem generischen Multiplexkonzept analog zu den Teilnehmerdaten als getrennte Verkehrskanäle definiert werden. Um diese Bestätigungen auszutauschen, ist es erforderlich, jeder Teilnehmerstation mindestens eine nicht ausschließlich genutzte Downlink- und Uplink-Ressource zuzuordnen, die dann den TFCI trägt.

Während im Downlink die Signalisierung von Datenübertragungen in bestimmten Ressourcen immer so erfolgt, daß die Basisfunkstation je nach Größe und Anzahl der Datenpakete sowie unter Berücksichtigung von Prioritäten derjenigen Teilnehmerstationen, deren Datenübertragung in denselben Ressourcen erfolgen kann, ein geeignetes Transportformat auswählt und den zugeordneten TFCI-Wert übermittelt, werden für den Uplink zwei Alternativen vorgeschlagen:

Eine Ausgestaltung besteht darin, daß im Uplink auf shared Ressourcen nach dem ALOHA-Prinzip zugegriffen wird. Jede Teilnehmerstation wählt selbständig je nach Datenvolumen ein Transportformat aus und übermittelt den zugeordneten TFCI sowie die entsprechenden Datenblöcke in den zugeordneten Ressourcen. Durch eine Beschränkung der Anzahl der Teilnehmerstationen, die sich bestimmte Ressourcen teilen, kann die mögliche mittlere Datenrate und die Wahrscheinlichkeit von Kollisionen festgelegt werden. Prioritäten zwischen Teilnehmerstationen können in weiterer Ausgestaltung dadurch berücksichtigt werden, daß beim Zuordnen der Teilnehmerstationen auf die Ressourcen Prioritätsklassen gebildet werden.

Zur Optimierung des Durchsatzes in shared Ressourcen kann nach einer weiteren Ausgestaltung die Vergabe dieser Ressourcen in der Basisfunkstation zentral gesteuert werden. Dazu sendet jede Teilnehmerstation, die Daten übertragen will, ein spezielles Transportformat und den zugehörigen TFCI. Dieses Transportformat belegt ausschließlich die den TFCI tragende Ressource und enthält lediglich einen Signalisierungsbearer mit einer Ressourcenanforderung. Die Basisfunkstation prüft diese Anforderung und sendet ihrerseits ein spezielles Transportformat, ebenfalls nur mit einem Signalisierungsbearer, in dem entweder die Anforderung abgelehnt wird oder aber eine oder mehrere der nicht TFCI-tragenden Ressourcen der Teilnehmerstation dieser für eine bestimmte Zeitdauer zuordnet. Entsprechend dem bisherigen RACH-FACH-Konzept kann eine Fortsetzung der Übertragung innerhalb dieser temporär belegten Ressourcen signalisiert werden, ohne daß ein erneuter ALOHA-Zugriff erfolgt.

Die Erfindung soll anhand eines Ausführungsbeispiels näher erläutert werden. In der zugehörigen Zeichnung zeigt
Fig. 1: Ein einleitend dargestelltes Funk-Kommunikationssystem,
Fig. 2: Das Wechselwirken von MAC und RRC bei der Zuteilung von Ressourcen in einem Funk-kommunikationssastem nach Fig. 1,
Fig. 3: Einen Vergleich zwischen der Ressourcenvergabe nach dem bekannten Stande der Technik und der Erfindung,
Fig. 4: Ein Beispiel für die Nutzung einer Tabelle zur Ressourcen-Zuteilung,
Fig. 5: Ein Beispiel für ein für Downlink-Übertragung mit Nutzung der Signalisierungs-Ressource durch drei UE.
Fig. 6: Ein Beispiel für eine Ressourcenaufteilung auf mehrere Teilnehmerstationen.

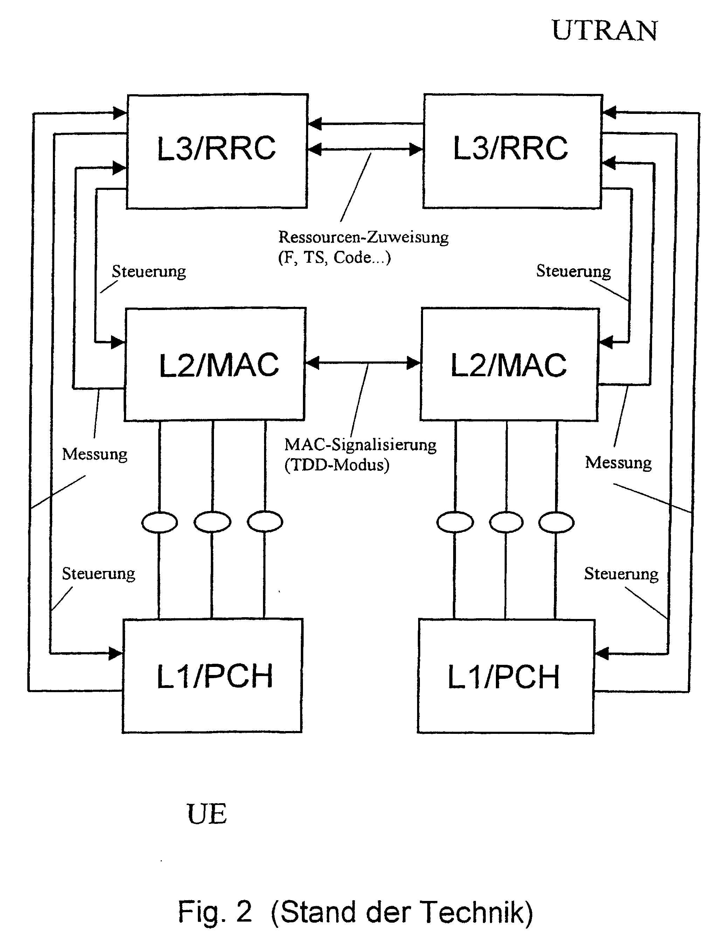

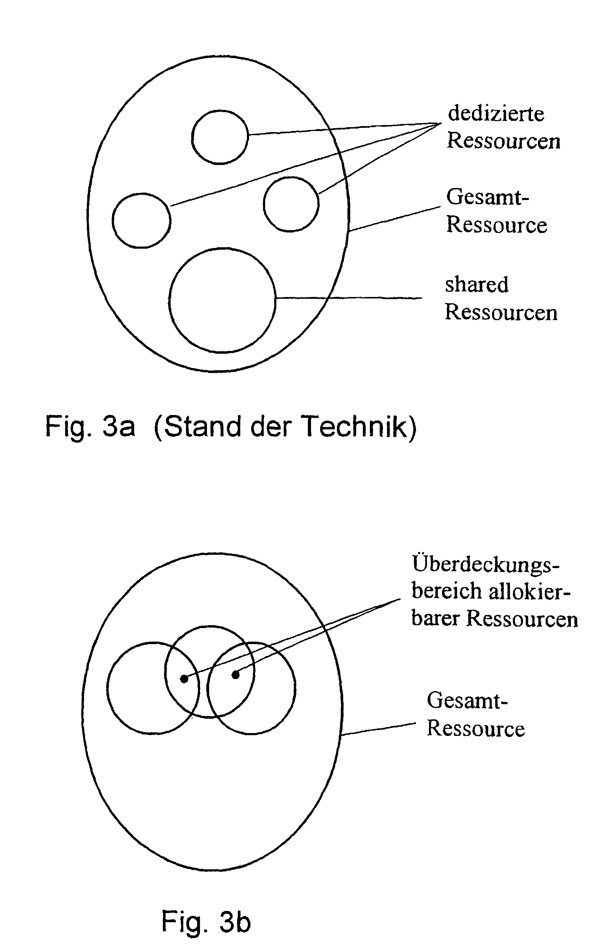

Fig. 2 zeigt das Wechselwirken zwischen der Instanz zur Ressourcenverteilung auf Schicht 2 (Layer L2), dem MAC (Medium Access Control) und dem Funkressourcen-Manager auf Schicht 3 (Layer L3), dem RRC (Radio Ressource Control) sowie dieser untereinander bei der Vergabe von logischen Kanälen auf physikalische Kanäle PCH (Layer L1). Layer 1 realisiert die physikalische Bitübertragung zwischen den Teilnehmerstationen UE und dem Netz (Node B) über die Funkschnittstelle, dies schließt auch die Steuerung der Sendeleistung ein. Eine Vergabe von Ressourcen für die Teilnehmerstationen UE erfolgt entweder direkt vom in der Basisfunkstationssteuerung RNC installierten Funkressourcen-Manager RRC oder über den in den Basisfunkstationen Node B installierten MAC. Der Mac ist funktionell in nicht näher dargestellter Weise zusätzlich in eine teilnehmerindividuelle Instanz MAC-d (dedicated Medium Access Control) und eine Instanz MAC-sh (Shared MAC) unterteilt. MAC-sh verwaltet zellspezifisch Ressourcen, die temporär für bestimmte TDMA-Rahmenperioden verschiedenen Teilnehmerstationen zugeordnet werden können. In Fig. 3 ist mit Begriffen aus der Mengenlehre der wesentliche Unterschied bei einer Ressourcenzuteilung im Funkressourcen-Manager RRC zwischen einer Systemarchitektur nach dem Stande der Technik (Fig. 3a) und einer erfindungsgemäßen Systemarchitektur (Fig. 3b) dargestellt. Gemäß Fig. 3a werden jeder Teilnehmerstation vom Funkressourcen-Manager RRC eine bestimmte Anzahl von Ressourcen exklusiv zugeordnet, dargestellt durch die disjunktiven kleinen Kreise, die vom MAC-d dynamisch verwaltet werden, das heißt, abhängig von den zu übertragenden Diensten und vom Datenaufkommen mit einer bestimmten Kombination von Datenpaketen gefüllt werden. Falls Dienste aufgrund variabler Datenrate die zur Verfügung stehende Kapazität temporär nicht benötigen, ist es nicht möglich, Daten von anderen Teilnehmerstationen in diesen Ressourcen zu übertragen. Zusätzlich ist ein sogenannter shared Bereich definiert, der entweder vom MAC-sh oder nach einem neueren Konzept vom Funkressourcen-Manager RRC verwaltet wird. Eine direkte Interaktion zwischen MAC-sh-Instanzen ist bisher nicht vorgesehen.

Mit beiden Konzepten steht dieser shared Bereich nur Nicht-Echtzeit-Diensten zur Verfügung und ein einheitliches Multiplex- und Signalisierungsverfahren für alle Dienste einer Teilnehmerstation ist nicht möglich.

Nach Fig. 3b wird erfindungsgemäß jeder Teilnehmerstation eine bestimmte Anzahl von Ressourcen mit einem einheitlichen Signalisierungsverfahren vom Funkressourcen-Manager RRC zugeordnet. Die größeren, sich nun aber überdeckende Kreise stellen dar, daß bestimmte Ressourcen mehreren Teilnehmerstationen gleichzeitig zugeordnet werden können, und deshalb die Anzahl der zugewiesenen Ressourcen steigt. Innerhalb des durch einen Kreis aufgespannten Zuweisungsraumes können erfindungsgemäß vom MAC-d temporäre Belegungen erfolgen, wobei durch geeignete Abstimmung mit anderen MAC-d-Instanzen, die auf die gleichen Ressourcen zugreifen können, ein Mehrfachzugriff ausgeschlossen wird.

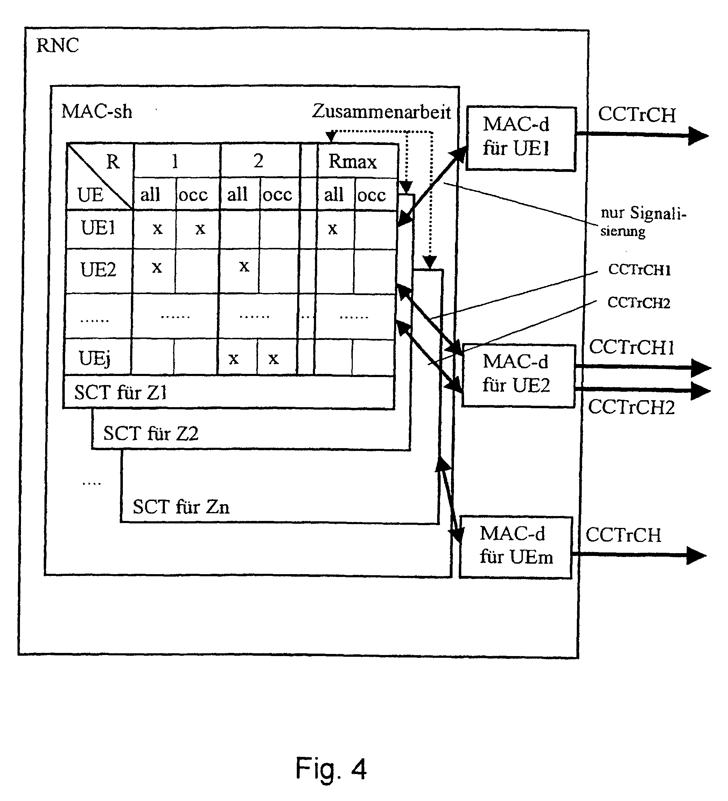

Fig. 4 zeigt einen Basisfunkstationssteuerung RNC (Radio Network Controller), über den mit Hilfe seiner Instanz MAC-sh Verbindungen zu Teilnehmerstationen UE1, UE2, ... UEm aufgebaut wurden. Für jede Teilnehmerstation UE wird eine teilnehmerspezifische Instanz MAC-d im Sinne eines Verwaltungsprozesses aufgebaut, die während der Dauer der Verbindung die funktechnische Ressourcen für diese Teilnehmerstation UE anfordert:

In der Basisfunkstationssteuerung RNC wird für jede von ihm verwaltete Zelle Z1 ... Zn eine Tabelle SCT (Shared Channel Table) angelegt, die jeweils den aktuellen Belegungszustand der Zellressourcen speichert. Diese Tabellen SCT sind im MAC-sh lokalisiert, der allerdings in diesem Konzept keine externe Schnittstelle zu anderen Layern bedient und deshalb nicht Gegenstand einer Standardisierung ist.

Um einer Teilnehmerstation UE1 ...UEm Ressourcen zuzuteilen, wird auf die Tabelle SCT (Shared Channel Table) zugegriffen, die für die in einer Zelle Z verfügbaren Kanäle R1 ... Rmax angibt, welcher Teilnehmerstation UE1 .. UEm welche Ressourcen R1 .. Rmax aktuell zuweisbar sind (all) und welche belegt (occ) sind.

Jeder teilnehmerspezifische MAC-d erhält von seinen RLC-Instanzen (RLC = Radio Link Control) in jedem TTI (Transmission Time Interval) eine bestimmte Anzahl von Datenpaketen zur Übertragung, belegt in der für ihn zuständigen Tabelle SCT eine entsprechende Ressource R1 ...Rmax und leitet die Datenpakete zusammen mit dem TFI (Transport Format Indicator) an den Physikal Layer (Layer 1) weiter. Der Mac-d belegt dabei immer nur eine Ressource, da derzeit im UTRA TDD-Modus Soft Handover nicht betrachtet wird.

In den Tabellen SCT kann außerdem für jede Ressource R1 ... Rmax festgelegt werden, welche Teilnehmerstation UE1 ..UEm mit welcher Priorität auf die betreffende Ressource zugreifen darf. Hierdurch können zum Beispiel Teilnehmerstationen UE in Echtzeit mit Teilnehmerstationen UE in Nicht -Echtzeit oder auch mehrere Teilnehmerstationen UE in Nicht-Echtzeit auf dieselben Ressourcen abgebildet werden. Um Konflikte bei der Ressourcenvergabe zu vermeiden, muß dabei sichergestellt werden, daß jede Ressource nur höchstens von einer Echtzeit-Teilnehmerstation UE zuweisbar ist. Für den Fall, daß einer Teilnehmerstation UE mehrere CCTrCHs (Coded Composite Transport Channels) zugeordnet sind, dies ist in Fig. 4 für MAC-d der Teilnehmerstation UE2 angedeutet, kann auch diesen Kanälen CCTrCH1, CCTRCH2 eine unterschiedliche Priorität zugewiesen werden. Zusätzlich kann eine Funktion für die Zusammenarbeit der Tabellen SCT für Z1 ... SCT für Zn vorgesehen werden, die es durch Abgleich zwischen Tabellen SCT von Nachbarzellen ermöglicht, die Interzell-Interferenzen zu reduzieren.

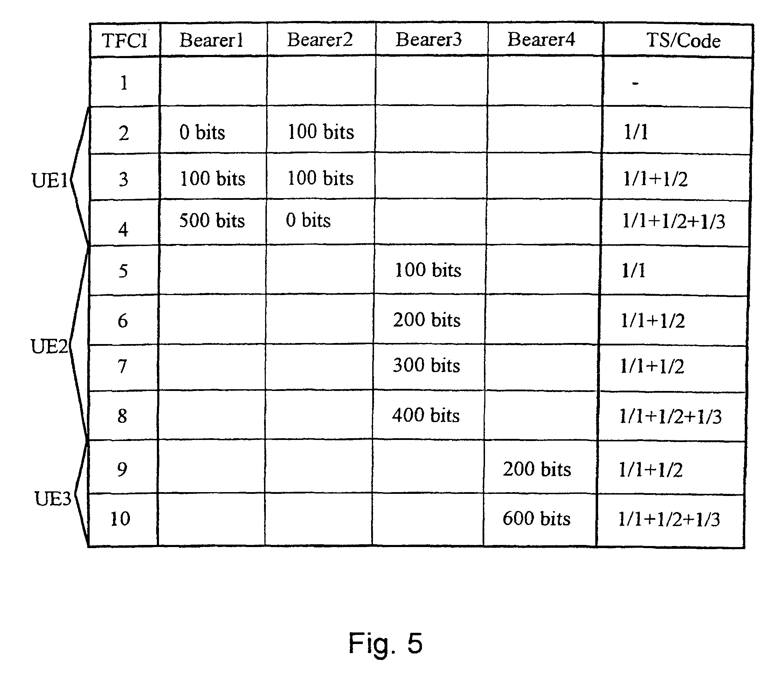

Fig.5 zeigt beispielhaft ein TFCS (Transport Format Combination Set) im Downlink für den Fall, daß eine Signalisierungsressource, die den TFCI (Transport Format Combination Indicator) überträgt, von drei Teilnehmerstationen UE1 .. UE3 genutzt wird. Jeder Teilnehmerstation ist ein bestimmter Wertebereich des TFCI fest zugeordnet. Der Teilnehmerstation UE1 ist der Wertebereich 2-4, der Teilnehmerstation UE2 der Wertebereich 5-8 und der Teilnehmerstation UE3 der Wertebereich 9-10 zugeordnet. Der Wert 0 wird gesendet, wenn keine Daten übertragen werden. Beim Aufbau einer Verbindung (Bearer1 ..Bearer4) werden alle für eine bestimmte Teilnehmerstation UE relevanten Zeilen dieser Tabelle der Teilnehmerstation UE mitgeteilt, um eine Decodierung des TFCI zu ermöglichen. In der letzten Spalte TS/Code ist festgelegt, welche Ressourcen (Zeitschlitz TS, Codesequenz Code) jeweils belegt sind. Im dargestellten Beispiel liegen alle Ressourcen im Zeitschlitz TS1, und allen Teilnehmerstationen UE sind die Codesequenzen 1-3 zugeordnet, auf die je nach Gesamtdatenrate zugegriffen wird.Die von allen UE gemeinsam genutzte Signalisierungs-Ressource liegt in der Ressource (1/1), d.h. im Zeitschlitz 1 und auf der Codesequenz 1. Die zusätzlichen Ressourcen (1/2) und (1/3) werden bei zunehmender Gesamt-Datenrate hinzugenommen: Eine einzelne Ressource reicht für etwa 160 Bits aus; darüberhinaus werden zwei bzw. Drei Resource Units bemötigt.

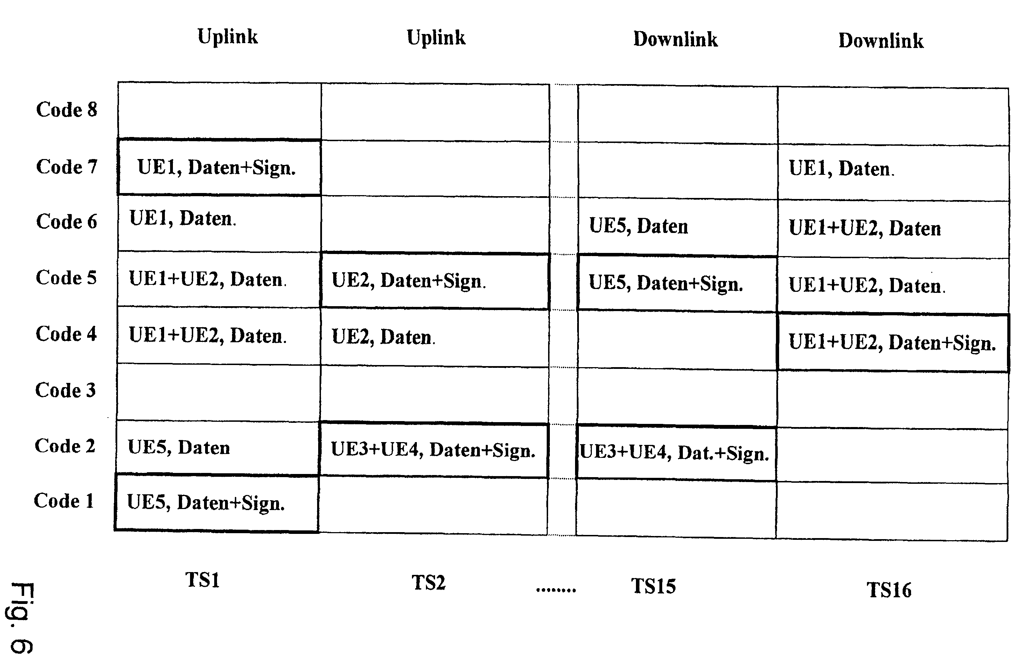

In Fig. 6 ist für ein Beispiel dargestellt, wie sich Ressourcen auf mehrere Teilnehmerstationen UE1 ...UE5 im Uplink und im Downlink auf die 16 Zeitschlitze eines TDMA-Rahmens aufteilen lassen.

Die Teilnehmerstation UE1 kann im Uplink über 4 Ressourcen im Zeitschlitz TS1 verfügen, von denen 2 mit der Teilnehmerstation UE2 geteilt werden. Während für die Teilnehmerstation UE1 der TFCI mit der Codesequenz Code 7 übertragen wird, ist für die Teilnehmerstation UE2 die Codesequenz Code 5 im Zeitschlitz TS2 vorgesehen. Hierdurch können beide Teilnehmerstationen UE1 und UE2 unabhängig voneinander auf jeweils 2 Zeitschlitze TS1, TS2 zugreifen und zwei weitere Ressourcen zwischen den beiden Teilnehmerstationen UE1, UE2 können "ge-shared" werden. Im Downlink wurde für beide Teilnehmerstationen UE1, UE2 ein größerer Überdeckungsbereich definiert. Außerdem wurde eine gemeinsame Signalisierungsressource (Codesequenz Code 4 im Zeitschlitz TS16) vorgesehen, da angenommen werden soll, daß lediglich Nicht-Echtzeit-Daten übertragen werden sollen. Die Teilnehmerstationen UE3 und UE4 nutzen im Downlink und Uplink nur jeweils eine gemeinsame Ressource, während die Teilnehmerstation UE5 ausschließlich auf exklusiv für sie reservierte Ressourcen zugreift.

Mit dem vorgeschlagenen Verfahren können von jeder Teilnehmerstation je nach ihrem Datenaufkommen vom Funkressourcen-Manager RRC spezifische Zuweisungen vorgenommen werden, um bei hoher Zellast den Gesamtdurchsatz zu maximieren. Hingegen ist es für sehr niedrige Verkehrsaufkommen weiterhin möglich, innerhalb einer Zelle oder auch für die ersten TDD-Releases immer nur exklusiv Reservierungen vorzunehmen.

## Patentansprüche

1. Verfahren zur dynamischen Zuweisung von Ressourcen in einem digitalen Funk-Kommunikationssystem, wobei die Ressourcen durch eine begrenzte Anzahl von physikalischen Kanälen (PCH) auf einer Funkschnittstelle zwischen Teilnehmerstationen (UE) und Basisfunkstationen (Node B) gebildet werden und den Teilnehmerstationen (UE) von einer Ressourcenverwaltung zugewiesen werden,
**dadurch gekennzeichnet,**
**daß** zumindest einer Anzahl von Teilnehmerstationen (UE) von der Ressourcenverwaltung nicht exklusiv eine einen jeweils aktuellen Bedarf übersteigende Übertragungskapazität zugewiesen wird.

2. Verfahren nach Anspruch 1,
**dadurch gekennzeichnet,**
**daß** Instanzen einer niederen Schicht (MAC-LAYER) der - Ressourcenverwaltung miteinander wechselwirkend den aktuellen Bedarf an physikalischen Kanälen (PCH) der verwalteten Teilnehmerstationen (UE) ermitteln, und die von einer höheren Schicht (RRC-LAYER) der Ressourcenverwaltung den Teilnehmerstationen (UE) nicht exklusiv zur Verfügung gestellte Übertragungskapazität den Teilnehmerstationen (UE) teilnehmerindividuell temporär vergeben.

3. Verfahren nach Anspruch 1 und 2,
**dadurch gekennzeichnet,**
**daß** den Teilnehmerstationen (UE) zu (Uplink) und von (Downlink) der Basisfunkstation (Node B) eine bestimmte Anzahl von nicht exklusiv zugewiesenen physikalischen Kanälen (DPCH) von der Ressourcenverwaltung (RRC-Layer) zur Verfügung gestellt und teilnehmer individuell temporär zuweisbar ist.

4. Verfahren nach einem der vorhergehenden Ansprüche,
**dadurch gekennzeichnet,**
**daß** die physikalischen Kanäle (PCH) nach einem kombinierten Vielfachzugriffsverfahren frequenz-, zeitschlitz- und codeselektiv (TD-CDMA) separiert und im Zeitduplexbetrieb (TDD) genutzt werden und die Zuteilung physikalischer Kanäle (PCH) auf einer Zuteilung von Zeitschlitzen (TS) und Codes beruht.

5. Verfahren nach Anspruch 4,
**dadurch gekennzeichnet,**
**daß** die Belegung der physikalischen Kanäle von TDMA-Rahmen zu TDMA-Rahmen dynamisch angepaßt wird.

6. Verfahren nach einem der vorhergehenden Ansprüche,
**dadurch gekennzeichnet,**
**daß** die Anzahl der nicht exklusiv zugewiesenen physikalischen Kanäle (DPCH) den Teilnehmerstationen (UE) in Abhängigkeit einer jeweiligen maximalen Gesamtdatenrate, einer mittleren Datenrate, einer maximalen Verzögerungszeit und/oder einer Interferenzsituation von der Ressourcenverwaltung zugewiesen wird.

7. Verfahren nach einem der vorhergehenden Ansprüche,
**dadurch gekennzeichnet,**
**daß** bei der Zuweisung von Ressourcen in der Ressourcenverwaltung regelmäßig wiederholte Messungen der jeweiligen Teilnehmerstation (UE) und/oder der Basisfunkstation (Node B) ausgewertet werden, und aufgrund der Meßergebnisse jeder verfügbaren Ressource ein Index zugewiesen wird, der eine Reihenfolge und/oder einen Dienst für die Ressource definiert.

8. Verfahren nach einem der vorhergehenden Ansprüche,
**dadurch gekennzeichnet,**
**daß** bestimmte dedizierte physikalische Kanäle (DPCH) für eine Signalisierung einer Ressourcenanforderung in Aufwärtsrichtung (Uplink) und für eine Signalisierung einer Ressourcenzuweisung in Abwärtsrichtung (Downlink) genutzt werden.

9. Verfahren nach Anspruch 8,
**dadurch gekennzeichnet,**
**daß** für jede Teilnehmerstation (UE) mindestens eine Signalisierungsressource innerhalb der zugewiesenen physikalischen Kanäle (DPCH) definiert wird.

10. Verfahren nach Anspruch 9,
**dadurch gekennzeichnet,**
**daß** die Signalisierungsressource in jedem zu übertragenden Datenblock, der einer oder mehreren Teilnehmerstationen (UE) zugeordnete Daten umfaßt, zusätzlich einen Transportformatanzeiger (TFCI) in einem beim Verbindungsaufbau genau festgelegten Format enthält.

11. Verfahren nach Anspruch 10,
**dadurch gekennzeichnet,**
**daß** der Transportformatanzeiger (TFCI) in den jeweils zeitlich ersten Zeitschlitz (TS) eines einem oder mehreren Teilnehmerstationen (UE) zugeordneten Datenblockes in einem TDMA-Rahmen angeordnet ist.

12. Verfahren nach einem der Ansprüche 9 bis 11, **dadurch gekennzeichnet,**
**daß** für jede Teilnehmerstation (UE) genau eine nicht exklusive Signalisierungsressource definiert wird.

13. Verfahren nach einem der Ansprüche 9 bis 12,
**dadurch gekennzeichnet,**
**daß** eine Ressourcentabelle (SCT) angelegt wird und die Signalisierungsressource mehreren Teilnehmerstationen (UE) - zuweisbar ist.

14. Verfahren nach einem der Ansprüche 10 bis 13,
**dadurch gekennzeichnet,**
**daß** in der Abwärtsrichtung (Downlink) eine Sendeleistung des Transportformatanzeigers (TFCI) auf die jeweils weitentfernteste Teilnehmerstation (UE) geregelt wird.

15. Verfahren nach Anspruch 13 oder 14,
**dadurch gekennzeichnet,**
**daß** für eine gemeinsame Nutzung einer Signalisierungsressource Teilnehmerstationen (UE) mit etwa gleichen Übertragungseigenschaften zusammengelegt werden.

16. Verfahren nach Anspruch 13,
**dadurch gekennzeichnet,**
**daß** bei gleichzeitiger Nutzung der Signalisierungsressource durch mehrere Teilnehmerstationen (UE) im Transportformatanzeiger (TFCI) eine teilnehmerindividuelle Kennung vorgesehen wird.

17. Verfahren nach einem der Ansprüche 9 bis 16,
**dadurch gekennzeichnet,**
**daß** einer Teilnehmerstation (UE) mindestens eine Ressource exklusiv zugeordnet wird, und in mindestens einer der zugeordneten Ressourcen der Transportformatanzeiger (TFCI) innerhalb eines dezidierten physikalischen Kanals (DPCH) übertragen wird.

18. Verfahren nach einem der vorvergehenden Ansprüche,
**dadurch gekennzeichnet,**
**daß** die Teilnehmerstationen (UE) in der Aufwärtsrichtung (Uplink) auf ihnen temporär zur Verfügung stehende gemeinsam nutzbare Ressourcen nach einem stochastischen Zufallsprinzip zugreifen, indem abhängig von einer benötigten Übertragungskapazität ein Transportformat ausgewählt und ein entsprechender Transportformatanzeiger (TFCI) zusammen mit den Datenblöcken in den zugeordneten Ressourcen gesendet werden.

19. Verfahren nach Anspruch 18,
**dadurch gekennzeichnet,**
**daß** die Zuordnung von Teilnehmerstationen (UE) zu den gemeinsam nutzbaren Ressourcen gemäß Prioritätsklassen erfolgt.

20. Verfahren nach einem vorhergehenden Anspruch,
**dadurch gekennzeichnet,**
**daß** eine Teilnehmerstation (UE) eine Ressourcenanforderung über eine Signalisierungsressource in einem speziellen Transportformat und dem Transportformatanzeiger (TFCI) sendet und die Basisfunkstation (Node B) nach Prüfung ihrerseits ein spezielles Transportformat mit einer Ablehnung oder temporären Zuweisung einer oder mehrerer der nicht TFCI-tragenden Ressourcen der Teilnehmerstation (UE) zurücksendet.

21. Funkkommunikationssystem, insbesondere Mobilfunksystem, zur Durchführung des Verfahrens zur dynamischen Zuweisung von Ressourcen gemäß Anspruch 1.

## Claims

1. Method for the dynamic allocation of resources in a digital radio communications system, where the resources are formed by a limited number of physical channels (PCH) on a radio interface between subscriber stations (UE) and base radio stations (Node B) and are allocated to the subscriber stations (UE) by a resource manager,
**characterized**
**in that** the resource manager nonexclusively allocates at least a number of subscriber stations (UE) a transmission capacity which exceeds a respective current demand.

2. Method according to Claim 1,
**characterized**
**in that** entities in a lower layer (MAC-LAYER) of the resource manager ascertain the current demand for physical channels (PCH) by the managed subscriber stations (UE) interactively with one another and temporarily allocate the transmission capacity made available to the subscriber stations (UE) nonexclusively by a higher layer (RRC-LAYER) of the resource manager to the subscriber stations (UE) on the basis of individual subscriber.

3. Method according to Claim 1 and 2,
**characterized**
**in that** the resource manager (RRC-Layer) makes a particular number of nonexclusively allocated physical channels (DPCH) to (uplink) and from (downlink) the base radio station (Node B) available to the subscriber stations (UE) and can temporarily allocate said number of physical channels on the basis of individual subscriber.

4. Method according to one of the preceding claims,
**characterized in that** the physical channels (PCH) are separated on a frequency-selective, time-slot-selective and code-selective basis (TD-CDMA) according to a combined multiple access method and are used in time-division duplex mode (TDD), and the allocation of physical channels (PCH) is based on an allocation of time slots (TS) and codes.

5. Method according to Claim 4,
**characterized**
**in that** the use of the physical channels is aligned dynamically from TDMA frame to TDMA frame.

6. Method according to one of the preceding claims,
**characterized**
**in that** the number of nonexclusively allocated physical channels (DPCH) is allocated to the subscriber stations (UE) by the resource manager on the basis of a respective maximum total data rate, a mean data rate, a maximum delay time and/or an interference situation.

7. Method according to one of the preceding claims,
**characterized**
**in that** the allocation of resources in the resource manager involves the evaluation of regularly repeated measurements for the respective subscriber station (UE) and/or for the base radio station (Node B), and, on the basis of the measurement results, each available resource is allocated an index which defines an order and/or a service for the resource.

8. Method according to one of the preceding claims,
**characterized**
**in that** particular dedicated physical channels (DPCH) are used for signalling a resource request in the uplink and for signalling a resource allocation in the downlink.

9. Method according to Claim 8, **characterized**
**in that** at least one signalling resource is defined for each subscriber station (UE) within the allocated physical channels (DPCH).

10. Method according to Claim 9,
**characterized**
**in that**, in each data block to be transmitted which comprises data associated with one or more subscriber stations (UE), the signalling resource additionally contains a transport format indicator (TFCI) in a format which is stipulated precisely upon connection setup.

11. Method according to Claim 10,
**characterized**
**in that** the transport format indicator (TFCI) is arranged in the respective time slot (TS) which is first in time in a data block associated with one or more subscriber stations (UE) in a TDMA frame.

12. Method according to one of Claims 9 to 11,
**characterized**
**in that** precisely one nonexclusive signalling resource is defined for each subscriber station (UE).

13. Method according to one of Claims 9 to 12,
**characterized in that** a resource table (SCT) is started and the signalling resource can be allocated to a plurality of subscriber stations (UE).

14. Method according to one of Claims 10 to 13,
**characterized**
**in that** a transmitted power for the transport format indicator (TFCI) in the downlink is regulated on the basis of the respectively most distant subscriber station (UE).

15. Method according to Claim 13 or 14,
**characterized**
**in that**, for joint use of a signalling resource, subscriber stations (UE) having approximately the same transmission characteristics are put together.

16. Method according to Claim 13,
**characterized**
**in that**, if the signalling resource is used by a plurality of subscriber stations (UE) at the same time, a subscriber-specific identifier is provided in the transport format indicator (TFCI).

17. Method according to one of Claims 9 to 16,
**characterized**
**in that** a subscriber station (UE) is allocated at least one resource exclusively, and in at least one of the allocated resources the transport format indicator (TFCI) is transmitted within a dedicated physical channel (DPCH).

18. Method according to one of the preceding claims,
**characterized**
**in that**, in the uplink, the subscriber stations (UE) access jointly useable resources which are temporarily available to them on the basis of a stochastic random principle by selecting a transport format on the basis of a required transmission capacity and sending a corresponding transport format indicator (TFCI) together with the data blocks in the allocated resources.

19. Method according to Claim 18,
**characterized**
**in that** subscriber stations (UE) are allocated to the jointly useable resources on the basis of priority classes.

20. Method according to a preceding claim,
**characterized**
**in that** a subscriber station (UE) sends a resource request relating to a signalling resource in a specific transport format and in the transport format indicator (TFCI), and, following a check on its part, the base radio station (Node B) returns a specific transport format with a rejection or a temporary allocation of one or more of the non-TFCI-bearing resources of the subscriber station (UE).

21. Radio communications system, in particular a mobile radio system, for carrying out the method for the dynamic allocation of resources according to Claim 1.

## Revendications

1. Procédé d'attribution dynamique de ressources dans un système de radiocommunication numérique, les ressources étant formées par un nombre limité de canaux physiques (PCH) sur une interface radio entre des stations d'abonné (UE) et des stations de base radio (Node B) et étant attribuées aux stations d'abonné (UE) par une gestion des ressources,
**caractérisé en ce que**
au moins un certain nombre de stations d'abonné (UE) se voient attribuer par la gestion des ressources, de manière non exclusive, une capacité de transmission dépassant à chaque fois un besoin actuel.

2. Procédé selon la revendication 1,
**caractérisé en ce que**
des instances d'une couche inférieure (MAC-LAYER) de la gestion des ressources déterminent ensemble, de manière interactive, le besoin actuel de canaux physiques (PCH) des stations d'abonné (UE) gérées et allouent aux stations d'abonné (UE), de manière temporaire et individuellement pour chaque abonné, la capacité de transmission mise à disposition de manière non exclusive aux stations d'abonné (UE) par une couche supérieure (RRC-LAYER) de la gestion des ressources.

3. Procédé selon la revendication 1 et 2,
**caractérisé en ce que**
un certain nombre de canaux physiques attribués de manière non exclusive (DPCH) sont mis à disposition des stations d'abonné (UE) à destination (Uplink) et en provenance (Downlink) de la station de base radio (Node B) par la gestion des ressources (RRC-Layer) et sont allouables de manière temporaire et individuellement pour chaque abonné.

4. Procédé selon l'une des revendications précédentes,
**caractérisé en ce que**
les canaux physiques (PCH) sont séparés selon une méthode combinée d'accès multiple par répartition en fréquence, en créneau temporel et en code (TD-CDMA) et utilisés en mode de duplexage par répartition dans le temps (TDD) et **en ce que** l'attribution de canaux physiques (PCH) repose sur une attribution de créneaux temporels (TS) et de codes.

5. Procédé selon la revendication 4,
**caractérisé en ce que**
l'occupation des canaux physiques de trame TDMA en trame TDMA est adaptée dynamiquement.

6. Procédé selon l'une des revendications précédentes,
**caractérisé en ce que**
le nombre de canaux physiques attribués de manière non exclusive (DPCH) est attribué par la gestion des ressources aux stations d'abonné (UE) en fonction à chaque fois d'un débit de données total maximal, d'un débit de données moyen, d'un temps de retard maximal et/ou d'une situation d'interférence.

7. Procédé selon l'une des revendications précédentes,
**caractérisé en ce que**
lors de l'attribution de ressources dans la gestion des ressources, des mesures régulièrement répétées de la station d'abonné (UE) concernée et/ou de la station de base radio (Node B) sont évaluées et **en ce que** sur la base des résultats de mesure, chaque ressource disponible se voit attribuer un index qui définit une séquence et/ou un service pour la ressource.

8. Procédé selon l'une des revendications précédentes,
**caractérisé en ce que**
certains canaux dédiés (DPCH) sont utilisés pour une signalisation d'une demande de ressources dans le sens montant (Uplink) et pour une signalisation d'une attribution de ressources dans le sens descendant (Downlink).

9. Procédé selon la revendication 8,
**caractérisé en ce que**
pour chaque station d'abonné (UE) au moins une ressource de signalisation est définie à l'intérieur des canaux physiques attribués (DCPH).

10. Procédé selon la revendication 9,
**caractérisé en ce que**
la ressource de signalisation contient dans chaque bloc de données à transmettre, lequel comprend des données attribuées à une ou plusieurs stations d'abonné (UE), en outre un indicateur de format de transport (TFCl) dans un format défini avec précision lors de l'établissement de la connexion.

11. Procédé selon la revendication 10,
**caractérisé en ce que**
l'indicateur de format de transport (TFCI), dans chaque premier créneau temporel (TS) dans le temps d'un bloc de données attribué à une ou plusieurs stations d'abonné (UE), est placé dans une trame TDMA.

12. Procédé selon l'une des revendications 9 à 11,
**caractérisé en ce que**
pour chaque station d'abonné (UE) précisément une ressource de signalisation non exclusive est définie.

13. Procédé selon l'une des revendications 9 à 12,
**caractérisé en ce que**
un tableau des ressources (SCT) est établi et **en ce que** la ressource de signalisation est allouable à plusieurs stations d'abonné (UE).

14. Procédé selon l'une des revendications 10 à 13,
**caractérisé en ce que**
dans le sens descendant (Downlink), une puissance d'émission de l'indicateur de format de transport (TFCI) est réglée à chaque fois sur la station d'abonné (UE) la plus éloignée.

15. Procédé selon la revendication 13 ou 14,
**caractérisé en ce que**
en vue d'une utilisation commune d'une ressource de signalisation, les stations d'abonné (UE) ayant des propriétés de transmission sensiblement identiques sont mises ensemble.

16. Procédé selon la revendication 13,
**caractérisé en ce que**
en cas d'utilisation commune de la ressource de signalisation par plusieurs stations d'abonné (UE), une identification individuelle par abonné est prévue dans l'indicateur de format de transport (TFCl).

17. Procédé selon l'une des revendications 9 à 16,
**caractérisé en ce que**
une station d'abonné (UE) se voit attribuer de manière exclusive au moins une ressource et **en ce que** dans au moins une des ressources attribuées, l'indicateur de format de transport (TCFI) est transmis à l'intérieur d'un canal physique dédié (DPCH).

18. Procédé selon l'une des revendications précédentes,
**caractérisé en ce que**
les stations d'abonné (UE), dans le sens montant (Uplink), accèdent à des ressources utilisables en commun et mises à leur disposition de manière temporaire selon un principe aléatoire stochastique en choisissant un format de transport en fonction d'une capacité de transmission requise et en envoyant un indicateur de format de transport (TCFI) correspondant ensemble avec les blocs de données dans les ressources attribuées.

19. Procédé selon la revendication 18,
**caractérisé en ce que**
l'attribution de stations d'abonné (UE) aux ressources utilisables en commun se fait selon des classes de priorité.

20. Procédé selon une revendication précédente,
**caractérisé en ce que**
une station d'abonné (UE) envoie une demande de ressources par l'intermédiaire d'une ressource de signalisation dans un format de transport spécial ainsi que l'indicateur de format de transport (TFCI) et **en ce que** la station de base radio (Node B), après vérification, renvoie de son côté à la station d'abonné (UE) un format de transport spécial contenant un refus ou une attribution temporaire d'une ou plusieurs des ressources non porteuses du TCFI.

21. Système de radiocommunication, en particulier système de radiocommunication mobile, pour la mise en oeuvre du procédé d'attribution dynamique de ressources selon la revendication 1.
